# EUROPEAN PATENT APPLICATION

(11) **EP 2 428 427 A2**
(43) Date of publication of application: **14.03.2012**
(21) Application number: 11181147.7
(22) Date of filing: 13.09.2011
(51) Int. Cl.: B62B 1/14

(54) **Hand truck unloading mechanism**

(30) Priority: 12.09.2011 US 230622; 13.09.2010 US 382378 P
(71) Applicant: DG Manufacturing, LLC, Wichita, KS 67226 (US)
(72) Inventor: Ryan, Paul, Wichita, KS Kansas 67230 (US); Stransky, John L, Lincoln, NE Nebraska 68522 (US); Wood, Robert Allen, Lincoln, NE Nebraska 68506 (US)
(74) Representative: Lunt, Mark George Francis

(57) **Abstract**

A hand truck(10) comprises: (1) a hand truck frame (11); (2) a support plate (20) adjacent a bottom portion of the hand truck frame; (3) at least one wheel (42,44) for facilitating the movement of the hand truck relative to a support surface; and (4) an unloading mechanism (50). The unloading mechanism comprises: (1) an item pushing member (70); (2) a cam assembly (51); and (3) at least one linking mechanism (60,64) that is positioned and adapted to link the cam assembly to the item pushing member so that moving the cam assembly from a first rotational orientation to a second rotational orientation causes the item pushing member to move from a first position adjacent the support plate to a second position adjacent the support plate. The cam may be adapted to allow a user to use their foot to move the cam between the first and second rotational orientations.

## Description

### BACKGROUND

Hand trucks are frequently used to move heavy items, such as heavy boxes and furniture. Currently, in order to remove such items from the hand truck, a user typically: (1) stops the hand truck; (2) lowers the hand truck's nose plate so that both the nose plate and the side-bottom portions of the items being carried by the hand truck touch the ground; and (3) pulls the hand truck directly backward, away from the items, so that the hand truck's nose plate slides out from under the items. At times, this process can be awkward, time-consuming, and physically difficult. Accordingly, there is a need for improved hand trucks and hand truck unloading mechanisms that make it easier to unload items from hand trucks.

### SUMMARY

A hand truck, according to various embodiments, comprises: (1) a hand truck frame; (2) a support plate adjacent a bottom portion of the hand truck frame; (3) at least one wheel for facilitating the movement of the hand truck relative to a support surface; and (4) an unloading mechanism. In particular embodiments, the unloading mechanism comprises: (1) an item pushing member; (2) a cam assembly; and (3) at least one linking mechanism that is positioned and adapted to link the cam assembly to the item pushing member so that moving the cam assembly from a first rotational orientation to a second rotational orientation causes the item pushing member to move from a first position adjacent the support plate to a second position adjacent the support plate. The cam may be adapted to allow a user to use their foot to move the cam between the first and second rotational orientations.

A hand truck unloading mechanism kit, according to particular embodiments, comprises: (1) an item pushing member; (2) a cam assembly; and (3) at least one linking mechanism for linking the cam assembly to the item pushing member so that moving the cam assembly from a first rotational orientation to a second rotational orientation causes the item pushing member to move, in a substantially linear motion, from a first position to a second position.

**I**n particular, a hand truck in accordance with the present invention comprises: a hand truck frame; a support plate adjacent a bottom portion of said hand truck frame; and at least one wheel for facilitating the movement of said hand truck relative to a support surface; and an unloading mechanism comprising: an item pushing member; a cam assembly; and at least one linking mechanism that is positioned and adapted to link said cam assembly to said item pushing member so that moving said cam assembly from a first rotational orientation to a second rotational orientation causes said item pushing member to move from a first position adjacent said support plate to a second position adjacent said support plate.

When said item pushing member is in said first position, said item pushing member may be disposed adjacent an inner edge of said support plate; and when said item pushing member is in said second position, said item pushing member may be spaced apart from said inner edge of said support plate.

Said at least one linking mechanism may be an elongated linking mechanism that extends through an opening in a face plate of said hand truck.

Said cam assembly may comprise a cam that defines a foot pedal for allowing a user to use said user's foot to rotate said cam from said first rotational orientation to said second rotational orientation. Said foot pedal may be substantially cylindrical.

Said at least one linking mechanism may comprise at least one elongated linking mechanism that extends between said pushing member and a position adjacent said cam. A first end of said at least one linking mechanism may be pivotably connected to a first portion of said cam; and said cam may be pivotably attached to an axle of said hand truck. Said cam may comprise a first, substantially L-shaped side member and a second, substantially L-shaped side member; said second side member may be spaced apart from, and substantially parallel to, said first side member; and said cam may comprise a foot pedal that extends between said first and second L-shaped side members. Preferably, said foot pedal is offset from, and substantially parallel to, said axle of said hand truck.

Said at least one linking mechanism may comprise a first linking mechanism and a second linking mechanism. Said first linking mechanism may be substantially parallel to said second linking mechanism. Preferably, each of said first and second linking mechanisms is rotatably attached to said cam along an axis that is substantially parallel to said axle.

**I**n another aspect, the present invention also provides a kit for converting an existing hand truck into a hand truck according to the first aspect of the present invention. In accordance with the invention, a hand truck unloading mechanism kit comprises: an item pushing member; a cam assembly; and at least one linking mechanism for linking said cam assembly to said item pushing member so that moving said cam assembly from a first rotational orientation to a second rotational orientation causes said item pushing member to move, in a substantially linear motion, from a first position to a second position.

Said cam assembly may comprise a cam that defines a foot pedal for allowing a user to use said user's foot to rotate said cam from said first rotational orientation to said second rotational orientation. Said foot pedal may be substantially cylindrical. Said at least one linking mechanism may comprise at least one elongated linking mechanism that extends between said pushing member and a position adjacent said cam.

A first end of said at least one linking mechanism may be adapted to be pivotably connected to a first portion of said cam; and said cam may be adapted to be attached to, and to pivot about a central axis of, an axle of a hand truck.

Said cam may compris a first, substantially L-shaped side member and a second, substantially L-shaped side member; said second side member may be adapted so that, when said hand truck unloading mechanism is installed on a hand truck, said second side member is spaced apart from, and substantially parallel to, said first side member; and said cam may comprise a foot pedal that is adapted to be installed so that said foot pedal extends between said first and second L-shaped side members.

In that case, said foot pedal is preferably adapted so that, when said hand truck unloading mechanism is installed on a hand truck, said foot pedal is offset from, and substantially parallel to, an axle of said hand truck.

### BRIEF DESCRIPTION OF THE DRAWINGS

Having thus described various embodiments in general terms, reference will now be made to the accompanying drawings, which are not necessarily drawn to scale, and wherein:
FIG. 1 is a front perspective view of a hand truck that includes a hand truck unloading mechanism according to a particular embodiment.
FIG. 2 is a first rear perspective view of a lower portion of a second hand truck that includes the hand truck unloading mechanism shown in Figure 1. In this figure, the hand truck's unloading mechanism is shown in an orientation in which the unloading mechanism's push plate is retracted.
FIG. 3 is a second rear perspective view of a lower portion of the hand truck and hand truck unloading mechanism of Figure 2. In this figure, the hand truck's unloading mechanism is shown in an orientation in which the unloading mechanism's push plate is partially extended.
FIG. 4 is a front perspective view of the hand truck unloading mechanism shown in Figure 1.
FIG. 5 is a side view of the hand truck unloading mechanism shown in Figure 1.
FIG. 6 is a top view of the hand truck unloading mechanism shown in Figure 1.
FIGS. 7 - 9 are a sequential series of front perspective views of the hand truck unloading mechanism of Figure 1, in which the unloading mechanism's push plate moves from a fully retracted position (see Figure 7) to an extended position (see Figure 9). For reference purposes, this figure shows the hand truck unloading mechanism installed adjacent a hand truck nose plate.
FIG. 10 is a side perspective view of a hand truck unloading mechanism according to a first alternative embodiment installed on a hand truck.
FIG. 11 is a rear perspective view of the hand truck unloading mechanism of FIG. 10.
FIG. 12 is a perspective view of a hand truck unloading mechanism according to a second alternative embodiment. For reference purposes, this figure shows the hand truck unloading mechanism installed adjacent a hand truck nose plate.
FIG. 13 is a side perspective view of a hand truck unloading mechanism according to a third alternative embodiment installed on a hand truck.

### DETAILED DESCRIPTION OF VARIOUS EMBODIMENTS

Various embodiments of the present invention will now be described more fully hereinafter with reference to the accompanying drawings, in which various embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

### Exemplary Hand Truck

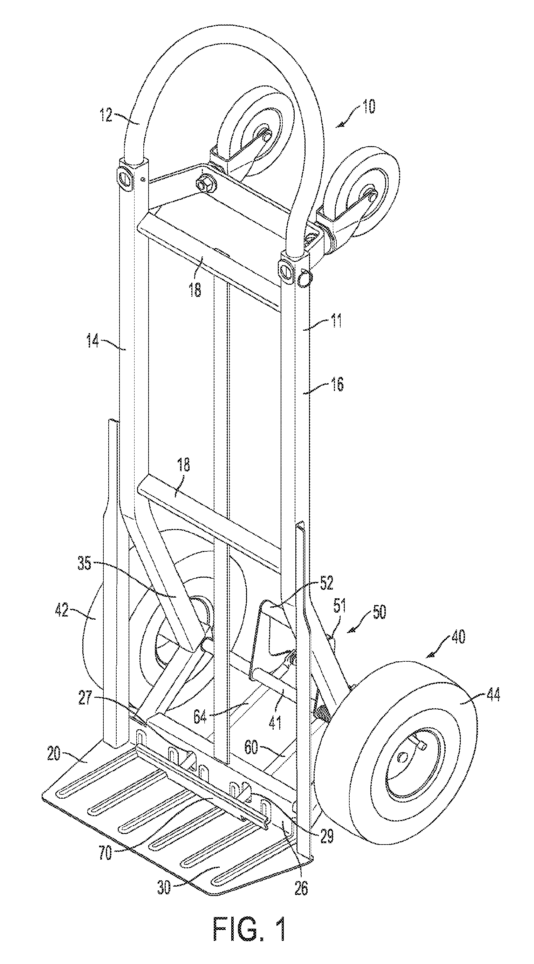

An exemplary hand truck according to particular embodiments of the invention is shown in Figure 1. In this embodiment, the hand truck 10 comprises: (1) a frame 11; (2) a nose plate 20; (3) a wheel assembly 40; and (4) a hand truck unloading mechanism 50. These various components are discussed in greater detail below.

### Frame

The hand truck 10 may include any suitable type of frame. In the embodiment shown in Figure 1, the frame 11 includes, for example: (1) a right side frame rail assembly 14 (which, in this embodiment, comprises a plurality of substantially straight, elongated frame members that are adapted to stand in a substantially vertical orientation when the hand truck 10 is in an upright position); (2) a left side frame rail assembly 16 (which, in this embodiment, comprises a plurality of substantially straight, elongated frame members that are adapted to stand in a substantially vertical orientation when the hand truck 10 is in an upright position); (3) a plurality of substantially horizontal crossbars 18 that extend between, and physically connect, the right and left side frame rail assemblies 14, 16; (5) a handle 12 that is mounted adjacent a top portion of the hand truck 10 as shown in Figure 1 and that extends between the respective top ends of the right and left side frame rail assemblies 14, 16; and (6) an axle support structure 35 for supporting the hand truck's wheel assembly.

The various components of the frame 11 may be made of any suitable, preferably sturdy, material (e.g., a suitable metal such as aluminum or steel, or plastic). These components are secured together using any appropriate combination of fasteners to provide a rigid frame for the hand truck 10. The frame itself may be in any suitable configuration.

### Nose Plate

The hand truck 10 may include any suitable type of nose plate 20. As shown in Figure 1, this nose plate 20 may include: (1) a substantially planar support plate 30; and (2) a substantially planar face plate 26 that extends upwardly (e.g., at about a 90 degree angle) adjacent a rear edge of the support plate 30. The nose plate 20 may be attached adjacent (e.g., to) the lower end of the hand truck's frame 11 in any suitable manner (e.g., using appropriate fasteners).

### Wheel Assembly

As may be understood from Figure 1, the hand truck 10 may include a wheel assembly 40 for facilitating the movement of the hand truck 10 relative to a support surface. In the embodiment shown in Figure 1, this wheel assembly 40 includes a hand truck axle 41 that is attached adjacent the bottom portion of the hand truck's frame 11 (e.g., via suitable hand truck axle connection members). The wheel assembly further includes a pair of wheels 42, 44 that are rotatably mounted, respectively, to opposite ends of the hand truck's axle 41.

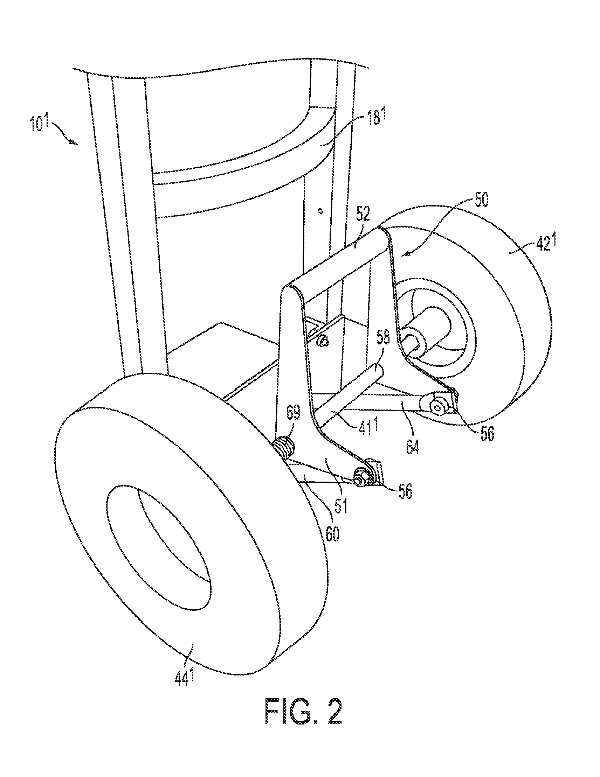

It should be noted that various commercially available hand trucks may be used to provide the hand truck's underlying base hand truck structure (which may include, for example, the hand truck's frame, nose plate, and wheel assembly). For example, in the embodiment of Figures 2-3, a "Magliner™" brand aluminum hand truck in used as the hand truck's base structure.

### Hand Truck Unloading Mechanism

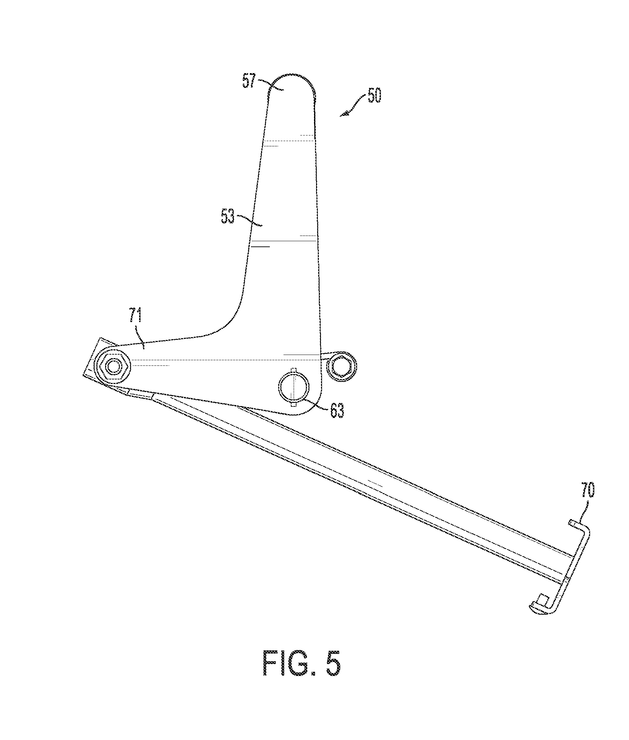

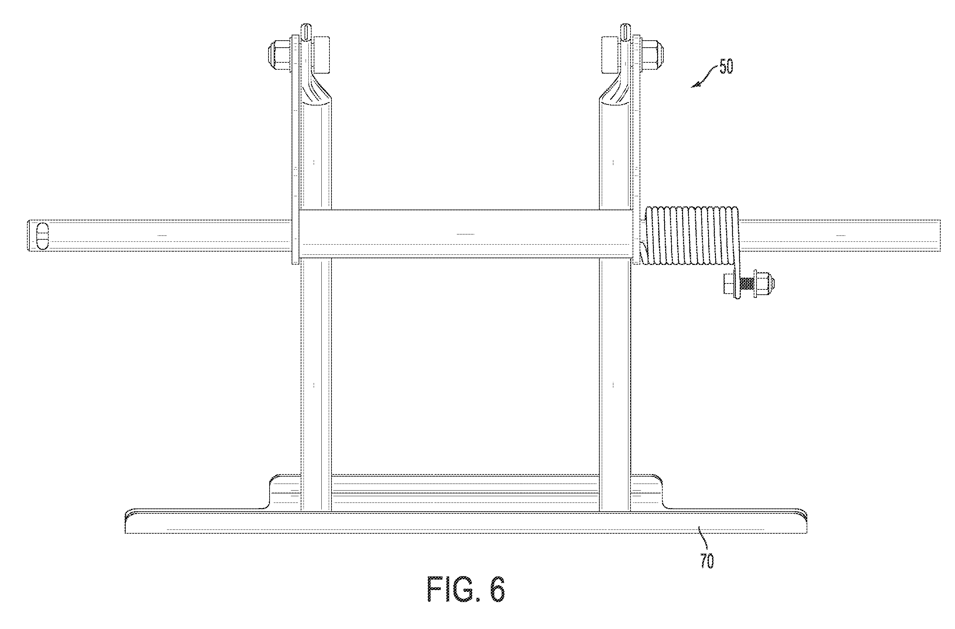

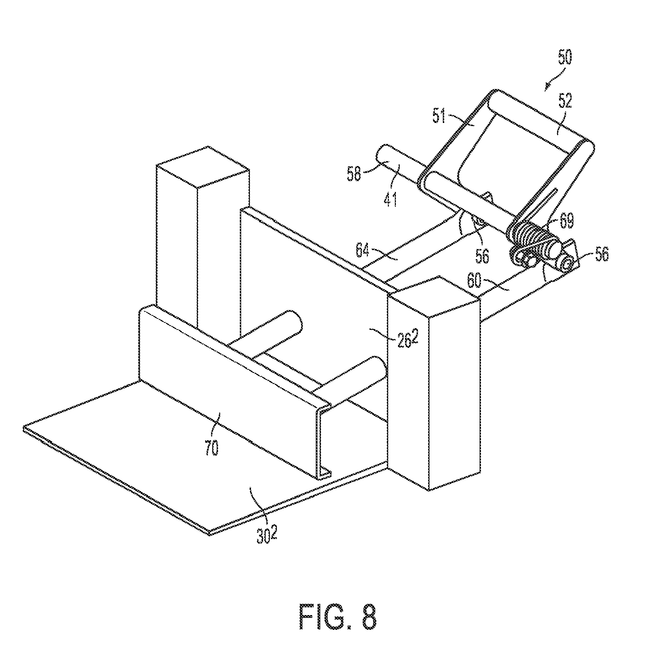

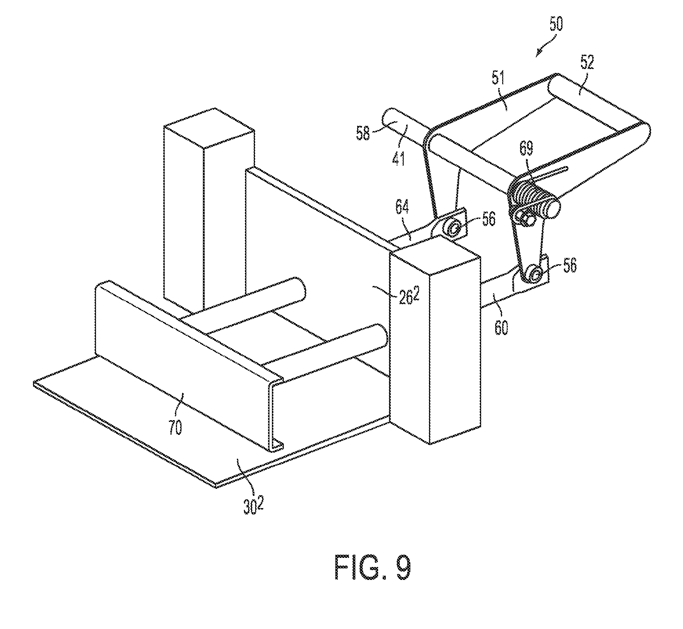

A hand truck unloading mechanism 50 according to a particular embodiment is shown in Figures 1-9. As may be understood, for example, from Figures 1-3, the hand truck unloading mechanism 50 includes: (1) a cam 51; (2) one or more pushing linkages 60, 64 (e.g., one or more push rods); (3) a spring 69; and (4) a push plate 70. These various elements are described in greater detail below.

### 1. Cam

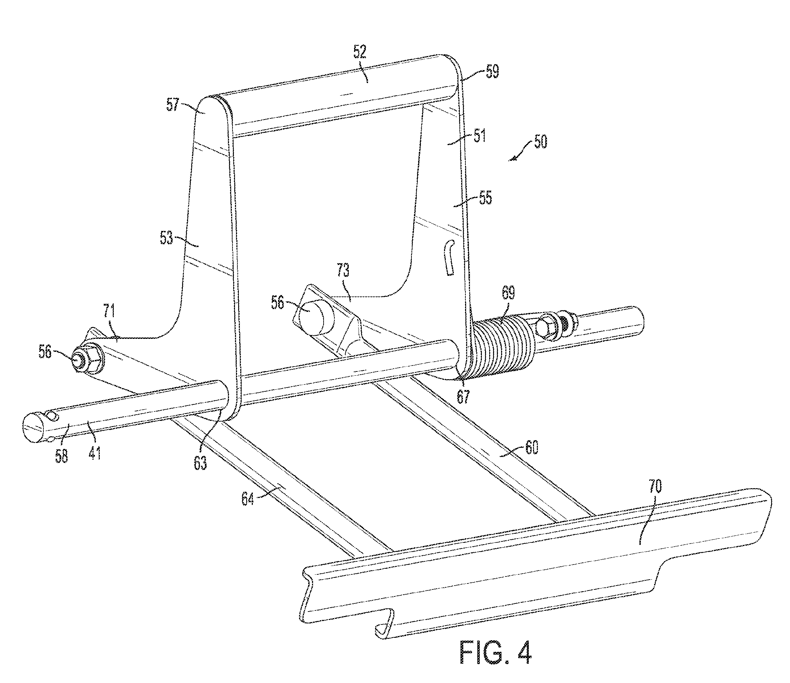

As may be understood from Figure 4, in the embodiment shown, the unloading mechanism's cam 51 comprises a pair of substantially planar, substantially L-shaped side members 53, 55 that are each substantially in the form of right angles. In particular embodiments, the side members are oriented so that they are substantially parallel to, and cofacing, each other.

In particular embodiments, the first respective end portions 57, 59 of the side members 53, 55 are connected by a substantially cylindrical foot pedal 52. As may be understood from Figure 4, each of the side members 53, 55 includes a substantially circular opening 63, 67 adjacent its apex that is sized to allow the axle of a hand truck to extend through the opening. In particular embodiments, these openings 63, 67 are sized and oriented so that: (1) a single, cylindrical axle 41 can extend through both of the openings 63, 67 at the same time; (2) when the axle 41 extends through the openings 63, 67, the interior surfaces of the side members 53, 55 that define each of the openings 63, 67 engage the outer surface of the axle 41; (3) the cam's foot pedal 52 is substantially parallel to the axle 41; and (4) the cam 51 is free to smoothly rotate about the axle 41.

In alternative embodiments, the opening adjacent each side member's apex may be defined by a suitable bearing. This facilitates a smooth rotation of the cam 51 about the axle 41.

In addition, the second respective ends 71, 73 of the cam's side members 53, 55 each include a connector 56 for connecting each of the respective second ends 71, 73 to the proximal end of a corresponding pushing linkage 60, 64 as shown in Figure 4. In a particular embodiments, this connector 56 (which may, for example, be a suitable fastener, such as a bolt) extends through an opening (e.g., a substantially circular opening) adjacent the second end 71, 73 of the side member 53, 55. In particular embodiments, the respective openings in the second ends 71, 73 of the side members 53, 55 are shaped and positioned so that: (1) they are substantially collinear; and (2) an axis that extends through a center of the respective openings is substantially parallel to both the foot pedal 52, and an axle 41 that extends through the openings 63, 67 that are adjacent the side members' respective apexes.

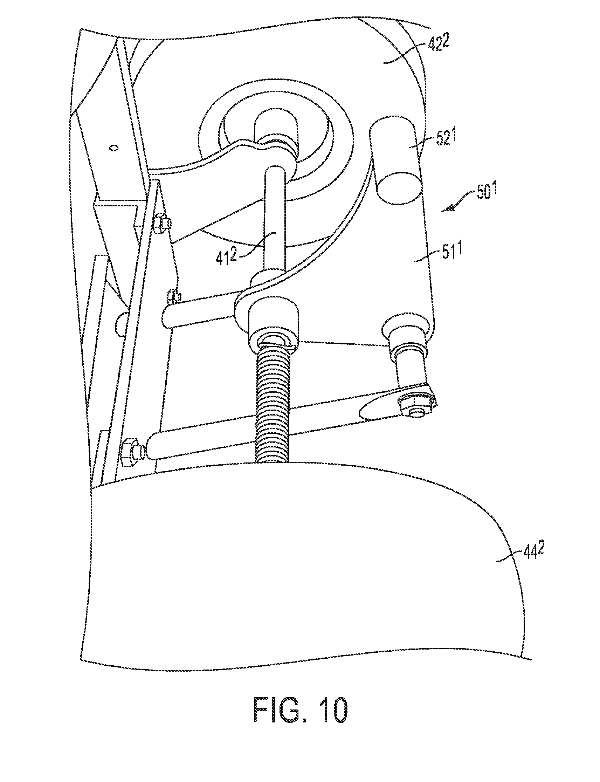

As discussed in greater detail below, it should be understood that the cam 51 shown in Figure 4 is only one exemplary embodiment, and that many other cam arrangements may be used in alternative embodiments. Examples of other suitable cams are shown in Figures 10-13.

### 2. Push Plate

As may be understood from Figure 1, the hand truck unloading mechanism 50 further includes a push plate 70 that is adapted to selectively push items off of the hand truck's nose plate 20. In particular embodiments, this push plate 70 may be in the form of an elongated strip of material having a substantially planar front face. However, in other embodiments, the push plate 70 may be curved, or may be in any other suitable shape.

As discussed in greater detail below, in the embodiment shown in Figure 1, the push plate 70 is adapted to be selectively moved between: (1) a first, fully retracted position in which the push plate 70 is disposed adjacent an inner edge of the hand truck's support plate 30 and/or the front surface of the hand truck's face plate 26, and (2) a second, fully extended position in which the push plate 70 is disposed adjacent (e.g., immediately adjacent) the outer edge of the hand truck's support plate 30. As described in greater detail below, this allows a user to use the push plate 70 to selectively remove items from the hand truck's nose plate 20.

### 3. Pushing Linkage(s)

As may be understood from Figures 2-4, the hand truck unloading mechanism 50 further includes a plurality of pushing linkages 60, 64 (e.g., push rods or other suitably shaped linkages) that extend between the cam 51 and the push plate 70. In the embodiment shown in Figures 1-9, the pushing linkages 60, 64 are each in the form of a straight, elongated push rod. As discussed above, the distal end of each push rod 60, 64 is rotatably attached to one of the cam's side portions via a suitable connector 56. The second end of each push rod 60, 64 is rotatably attached adjacent the rear portion of the push plate 70. In various embodiments, the second ends of the push rods 60, 64 attach to the rear portion of the push plate 70 on opposite lateral sides of the push plate 70.

In various embodiments, when the pushing mechanism is installed on a hand truck, as shown in Figure 1, the cam 51 is installed to rotate about the hand truck's axle 41 as discussed above, and the pushing linkages 60, 64 extend through openings 27, 29 in the hand truck's face plate 26. This allows the cam 51, which is positioned adjacent the back of the hand truck 10 to control the motion of the push plate 70, which is positioned adjacent the upper surface of the support plate 30, adjacent the front of the hand truck 10.

### 4. Cam, Push Plate and Push Rod Assembly

In particular embodiments, the cam 51, pushing linkages 60, 64 and push plate 70 are dimensioned and assembled so that, when the cam 51 is rotated between a first position and a second position, the push plate 70 moves from: (1) a first, fully retracted position in which the push plate 70 is disposed immediately adjacent an inner edge of the hand truck's support plate 30 and/or the hand truck's face plate 26, to (2) a second, fully extended position in which the push plate 70 is disposed adjacent (e.g., immediately adjacent) the outer edge of the hand truck's support plate 30. Similarly, when the cam 51 is moved from the second position described above to the first position described above, the push plate 70 moves from the fully extended position to the fully retracted position.

As shown in Figure 2, the hand truck unloading assembly 50 may further include a spring 69 (e.g., a linear or torsion spring) for biasing the cam 51 toward the first cam position, which is discussed above and shown in Figures 1 and 2. For example, the embodiment shown in Figure 2 includes a torsion spring 69 that is mounted on the hand truck's axle and that is attached to the cam 51 in any suitable manner so that the torsion spring 69 biases the cam 51 toward the first cam position. As a result, when the cam 51 is rotated from the first position to the second position discussed above, a load is placed on the spring 69, which causes the spring 69 to exert a rotational force on the cam 51. This serves to mechanically bias the cam 51 toward the first cam position.

### Use of the Hand Truck Unloading Mechanism

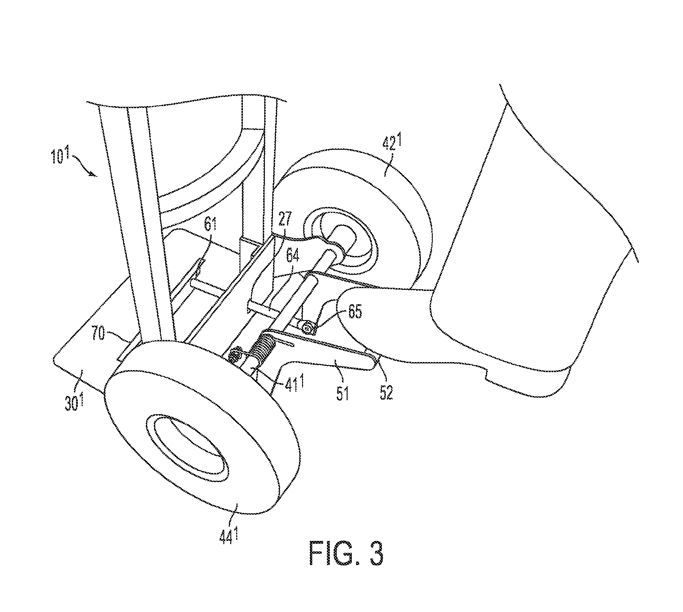

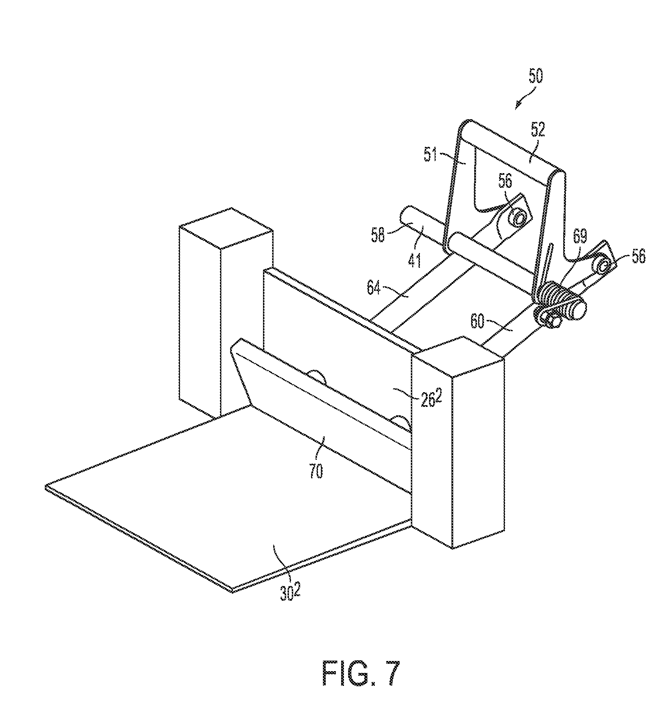

To use the hand truck unloading mechanism 50 to unload items that are supported by the hand truck's support plate 30, a user first places their foot on the cam's foot pedal 52 and then uses their foot to rotate the cam 51 in a clockwise direction (as viewed from the perspective of Figure 2) about the hand truck's axle 41. This is done by pressing down on the cam's foot pedal 52. As may be understood from Figure 3, rotating the cam 51 in the clockwise direction serves to force the push rods' respective first ends 61 away from the hand truck's face plate 26. This, in turn, moves the push plate 70 away from the face plate 26, which serves to sweep items off of the hand truck's support plate 30. The motion of the cam 51, push rods 60, 64, and push plate 70, as the hand truck unloading mechanism 50 is used to remove items from the hand truck's support plate 30, is shown in Figures 7-9.

After the push plate 70 sweeps the items off of the support plate 30, the user lifts their foot slowly away from the floor. This allows the spring 69 to slowly rotate the cam 51 back into the first position shown in Figure 1. The user may then load other items onto the hand truck's support plate 30 and later unload the items by repeating the process described above.

### Other Embodiments of the Hand Truck Unloading Mechanism

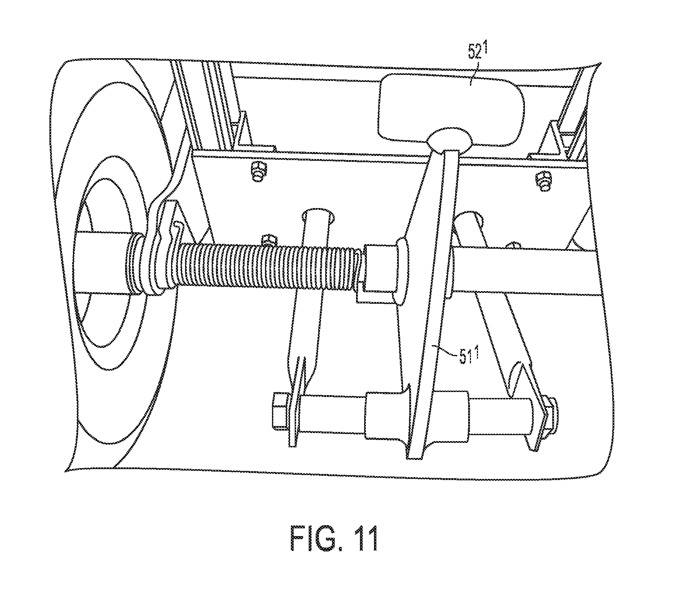

A first alternative embodiment of the hand truck unloading mechanism is shown in Figures 10 and 11. In this embodiment, the cam 51¹ is substantially in the form of a right triangle and has a substantially cylindrical foot pedal 52¹ adjacent one end.

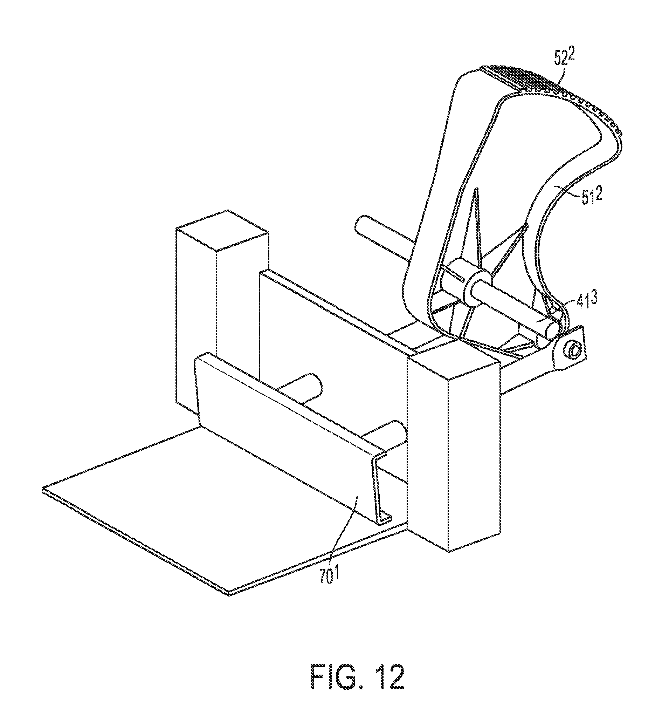

A second alternative embodiment is shown in Figure 12. In this embodiment, the cam 51² is generally boot-shaped and has a textured foot engagement surface 52² for allowing a user to use their foot to rotate the cam 51² and thereby extend the push plate 70¹ as discussed above.

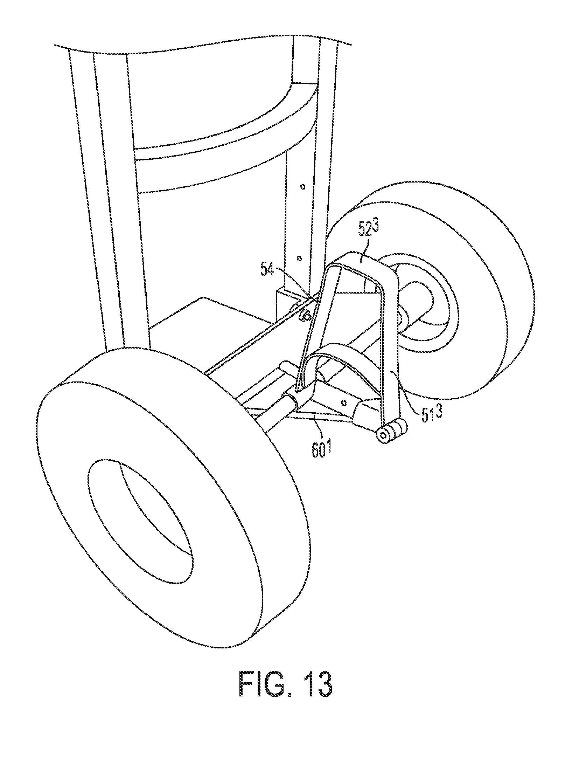

A third alternative embodiment is shown in Figure 13. In this embodiment, the unloading mechanism's cam 51³ is substantially in the form of a symmetrical, substantially planar trapezium. In this embodiment, the unloading mechanism only includes a single push rod 60¹.

### Hand Truck Unloading Mechanism Kits

Although the hand truck unloading mechanisms are described in various instances above as being installed on a hand truck, other embodiments include hand truck unloading mechanism kits that are configured for allowing a user to retrofit an existing hand truck with a hand truck unloading mechanism. Such kits may include, for example, the various parts of any one or more of the hand truck unloading mechanisms described above, along with instructions on how to install the mechanism on an existing hand truck. In particular embodiments, this would involve drilling one or more holes in the hand truck's face plate so that the hand truck's push rods may extend through the face plate as shown in Figure 1. The installation process may also include: (1) rotatably attaching the cam to the hand truck's axle; (2) installing the torsion spring on the hand truck's axle; and (3) attaching the hand truck's push rods so that they extend from a bottom portion of the cam, through holes in the hand truck's face plate, and to a rear surface of the push plate.

### Conclusion

Many modifications and other embodiments of the invention will come to mind to one skilled in the art to which this invention pertains having the benefit of the teachings presented in the foregoing descriptions and the associated drawings. For example, as will be understood by one skilled in the relevant field in light of this disclosure, the invention may take form in a variety of different mechanical and operational configurations. As a particular example, while various hand truck unloading mechanisms are described above as including a cam that is attached to the hand truck's axle, in other embodiments, the cam may be attached to another suitable portion of the hand truck. Similarly, while the disclosure above describes a foot-activated pushing mechanism for unloading items from a hand truck, other embodiments may include a hand or knee operated mechanism (or any other suitable mechanism) for unloading items from the hand truck. Therefore, it is to be understood that the invention is not to be limited to the specific embodiments disclosed and that modifications and other embodiments are intended to be included within the scope of the appended exemplary concepts. Although specific terms are employed herein, they are used in a generic and descriptive sense only and not for the purposes of limitation.

## Claims

1. A hand truck comprising:
a hand truck frame;
a support plate adjacent a bottom portion of said hand truck frame; and
at least one wheel for facilitating the movement of said hand truck relative to a support surface; and
an unloading mechanism comprising:
an item pushing member;
a cam assembly; and
at least one linking mechanism that is positioned and adapted to link said cam assembly to said item pushing member so that moving said cam assembly from a first rotational orientation to a second rotational orientation causes said item pushing member to move from a first position adjacent said support plate to a second position adjacent said support plate.

2. A hand truck as claimed in claim 1, wherein:
when said item pushing member is in said first position, said item pushing member is disposed adjacent an inner edge of said support plate; and
when said item pushing member is in said second position, said item pushing member is spaced apart from said inner edge of said support plate.

3. A hand truck as claimed in claim 2, wherein said at least one linking mechanism is an elongated linking mechanism that extends through an opening in a face plate of said hand truck.

4. A hand truck as claimed in claim 1, 2 or 3 wherein:
said cam assembly comprises a cam that defines a foot pedal for allowing a user to use said user's foot to rotate said cam from said first rotational orientation to said second rotational orientation.

5. A hand truck as claimed in claim 4, wherein said foot pedal is substantially cylindrical.

6. A hand truck as claimed in any preceding claim, wherein said at least one linking mechanism comprises at least one elongated linking mechanism that extends between said pushing member and a position adjacent said cam.

7. A hand truck as claimed in claim 6, wherein:
a first end of said at least one linking mechanism is pivotably connected to a first portion of said cam; and
said cam is pivotably attached to an axle of said hand truck.

8. A hand truck as claimed in claim 7, wherein:
said cam comprises a first, substantially L-shaped side member and a second, substantially L-shaped side member;
said second side member is spaced apart from, and substantially parallel to, said first side member; and
said cam comprises a foot pedal that extends between said first and second L-shaped side members.

9. A hand truck as claimed in claim 8, wherein:
said foot pedal is offset from, and substantially parallel to, said axle of said hand truck.

10. A hand truck as claimed in any preceding claim 1, wherein:
said at least one linking mechanism comprises a first linking mechanism and a second linking mechanism.

11. A hand truck as claimed in claim 10, wherein:
said first linking mechanism is substantially parallel to said second linking mechanism.

12. A hand truck as claimed in claim 11, wherein each of said first and second linking mechanisms is rotatably attached to said cam along an axis that is substantially parallel to said axle.

13. A hand truck unloading mechanism kit for a hand truck that comprises:
a hand truck frame;
a support plate adjacent a bottom portion of said hand truck frame; and
at least one wheel for facilitating the movement of said hand truck relative to a support surface;
wherein the kit comprises:
an item pushing member;
a cam assembly; and
at least one linking mechanism for linking said cam assembly to said item pushing member so that moving said cam assembly from a first rotational orientation to a second rotational orientation causes said item pushing member to move, in a substantially linear motion, from a first position to a second position.

14. A kit as claimed in claim 13 which is adapted, when installed in a hand truck, to produce a hand truck as claimed in any of claims 2 to 12.
